# EUROPEAN PATENT APPLICATION

(11) **EP 1 233 590 A1**
(43) Date of publication of application: **21.08.2002**
(21) Application number: 01301422.0
(22) Date of filing: 19.02.2001
(51) Int. Cl.: H04L 29/06

(54) **Content provider for a computer system**

(71) Applicant: SUN MICROSYSTEMS, INC., Palo Alto, California 94303 (US)
(72) Inventor: Higgins, Geoff, Dundrum, Dublin (IE); Krivoruchko, Michael, Stilorgan, Dublin (IE); Hayes, Michael, Lucan, County Dublin (IE)
(74) Representative: Harris, Ian Richard

(57) **Abstract**

A content provider (70) interfaces a client (80) with a server (82). The content provider comprises a task manager operable to initiate and manage a session for a client and to query the server where required for content requested by the client. The content provider also comprises session content storage for storing content associated with that session. The content provider further comprises a protocol adapter operable to respond to the task manager for interfacing with the server to retrieve content requested by the client. The retrieved content is stored in the session content storage associated with the session for the client.

## Description

### BACKGROUND OF THE INVENTION

This invention relates to improving access to information, or content, in response to queries from a client application in a computer system.

A particular application of the invention relates to improving access to information stored in a server in a network environment. A specific example of this relates to accessing calendar and schedule information stored on a calendar server. A calendar server is a server that can provide calendaring and scheduling services to users in a network environment.

An aim of the present invention is, therefore, to improve access to information services in a computer environment, and particularly, but not exclusively, to the provision of calendaring and scheduling information stored in a calendar server in such a network environment.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

In one aspect, the invention provides a content provider operable to interface a client with a server. The content provider comprises a task manager operable to initiate and manage at least one session for the client and to query the server where required for content requested by the client. The content provider also comprises session content storage for storing content associated with that session. The content provider further comprises a protocol adapter operable to respond to the task manager for interfacing with the server to retrieve content requested by the client. The retrieved content is stored in the session content storage associated with the session for the client.

An embodiment of the invention can thus facilitate the access of information services through the use of an interface between a client and server providing the services to be accessed.

The client could be a client application, for example a web browser or an office application that is implemented in a client device in the form of a computer station. Alternatively, the client may be an application implemented on a device, for example a mobile telephone, personal data access device, etc, that is connectable to a computer network. The client applications are typically such that provide a user interface through which access to information can be requested. An embodiment of the content provider could also be implemented in the client device. Alternatively, an embodiment of the content provider could be implemented on a server through which the client device makes access to a network. As a further option, the content provider could be implemented as an interface between a network and a server in which information to be accessed is held.

An embodiment of the content provider can include a protocol adapter operable to convert between an internal data format and a server data format. The content provider can include a plurality of protocol adapters, each protocol adapter being operable to convert between the internal data format and a respective server data format.

In a particular embodiment of the invention, the server is a calendar server and the server data format is a calendar format. The internal format can be based on a markup language.

The task manager can be operable to allocate a root in the session content storage for a client session.

The content provider can include a task queue and a task processor, the task processor being operable to manage a queue of tasks. The task manager can be responsive to a query from the client for content to access any pre-existing session storage for the client to retrieve the content if already stored therein, and to query the server otherwise. The task manager can further be operable to allocate a location in the session storage as a root for data associated with the session.

Another aspect of the invention provides a computer program comprising computer code operable to form a content provider for interfacing a client with a server. The computer code can be operable to provide a task manager component operable to initiate and manage a session for a client and to query the server where required for content requested by the client. The computer code can also be operable to provide session content storage for storing content associated with that session. The computer code can further be operable to provide a protocol adapter component operable to respond to the task manager for interfacing with the server to retrieve content requested by the client. The retrieved content is stored in the session content storage associated with the session for the client.

A computer program product can be provided that comprises the computer program with the computer code being carried by a carrier medium. The carrier medium can be a storage medium or a transmission medium, for example.

The invention also provides a computer system comprising a processor, memory and a content provider as set out above.

The invention further provides a method of providing content for interfacing a client with a server. The method comprises steps of:
initiating and managing a session for a client and querying the server where required for content requested by the client;
storing content associated with that session; and
interfacing with the server to retrieve content requested the client, the retrieved content being stored in the session content storage associated with the session for the client.

### BRIEF DESCRIPTION OF THE DRAWINGS

Exemplary embodiments of the present invention will be described hereinafter, by way of example only, with reference to the accompanying drawings in which like reference signs relate to like elements and in which:
Figure 1 is a schematic overview of a network environment in which an embodiment of the present invention may be implemented;
Figure 2 is a schematic hardware overview of a computer on which software for implementing an embodiment of the invention may be provided;
Figure 3 is a schematic overview of software components for an example of the invention where a content provider is implemented in a client computer;
Figure 4 is a schematic representation of components of an exemplary embodiment of the present invention;
Figure 5 is a schematic representation of the provision of information using an embodiment of the present invention;
Figure 6 is a schematic representation in more detail of an embodiment of the present invention.

### DESCRIPTION OF PARTICULAR EMBODIMENTS

Exemplary embodiments of the present invention are described in the following with reference to the accompanying drawings.

An embodiment of the present invention will be described hereinafter for providing calendar and schedule information from a calendar server in a network environment. However, it should be appreciated that this embodiment is described by way of example only, and that the invention can equally be applied to the provision of other information services.

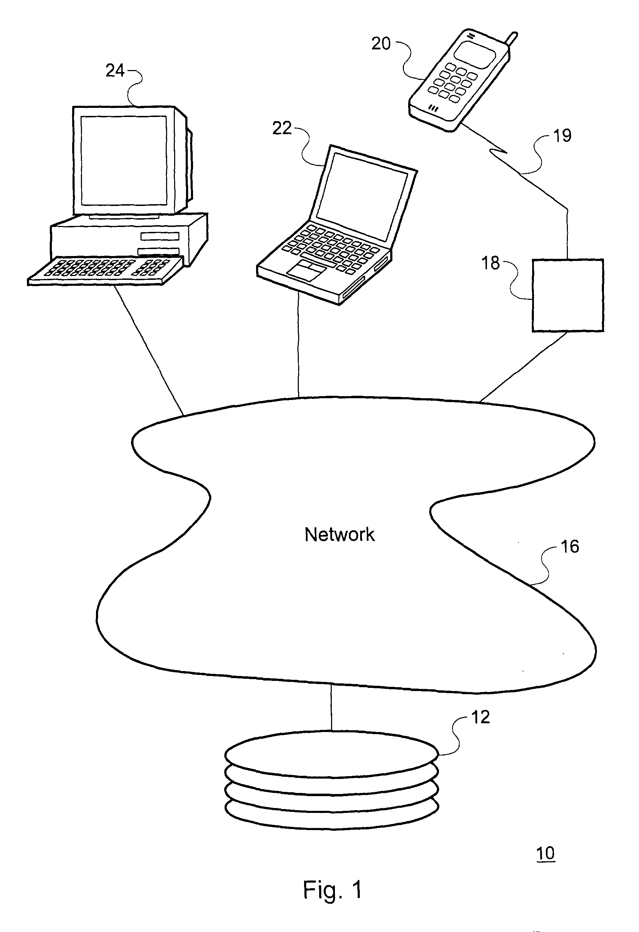

Figure 1 is an overview of a network environment 10 in which a content provider provides clients with dynamic access via a network 16 to a calendar server system 12. The network 16 can be a local area network, a wide area network, an intranet, the Internet, any other form of network, or any combination of the above. The client could take many forms. Thus, the client could be a client application in the form of functionality in a personal data access device or a telephone 20. Figure 1 illustrates an example of this where a mobile telephone 20 is connected via a wireless link 19 to a station 18, the station 18 including at least one computer and being connected to the network 16. Typically, such a client application will not include a high degree of functionality and is often terms a "thin client". Alternatively, it could be in the form of a client application in a laptop or other computer device 22, a conventional personal computer 24, or indeed any other form of system which enables access to information via a network 16. Such client application could be in the form of an office application, or a web browser, or the like that will typically have a higher degree of functionality, and could be called a "thick client".

In an embodiment of the invention, the client application will have access to a server system by a content provider. In the present embodiment, the content provider is implemented at the client side, rather than the server side. Thus, for the example of a thin client such as a web-access mobile telephone, the content provider is typically implemented in the station 18, although it could also be implemented in the mobile phone, personal data assistant device, etc. In the case of a personal computer, computer workstation or the like, the content provider can be implemented in the personal computer or computer workstation.

In the following, an exemplary implementation of a content provider in a client station in the form of a personal computer (e.g., the personal computer 24 of Figure 1) will be described.

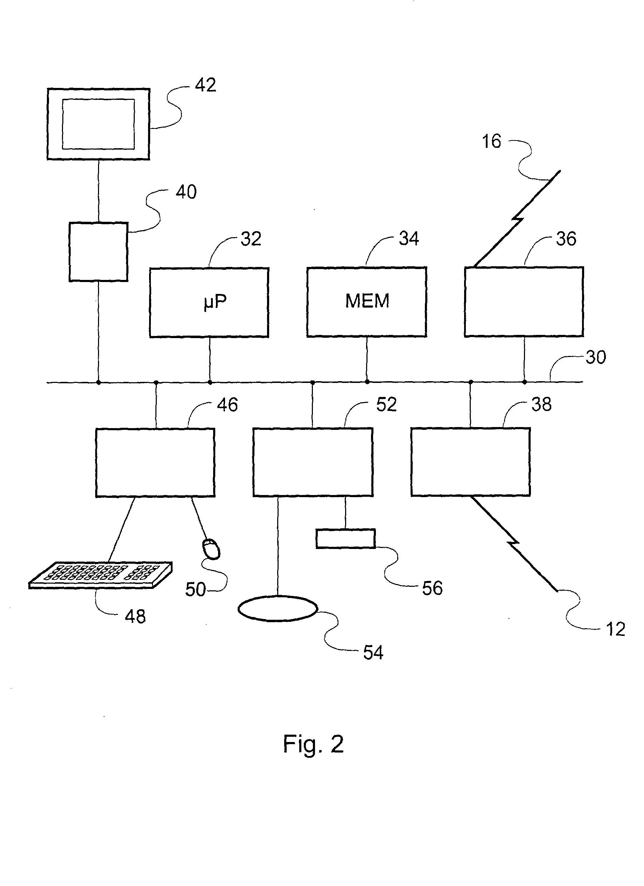

Figure 2 is a schematic representation of hardware components of a personal computer 24. As shown in Figure 2, the personal computer 14 includes a microprocessor 32 and a main memory 34 interconnected via a bus 30. A first network interface 36 enables connection to the external network 16. Optionally a further network interface 38 can enable connection to another network. A display adapter 40 can support a display device 42. An input adapter 46 can be connected to input devices such as a keyboard 48 and a mouse 50. One or more media drive interfaces 52 can enable the connection of various media drives 54/56 to the bus 30. It should be appreciated that Figure 2 is merely schematic, and that the personal computer 24 could be configured differently.

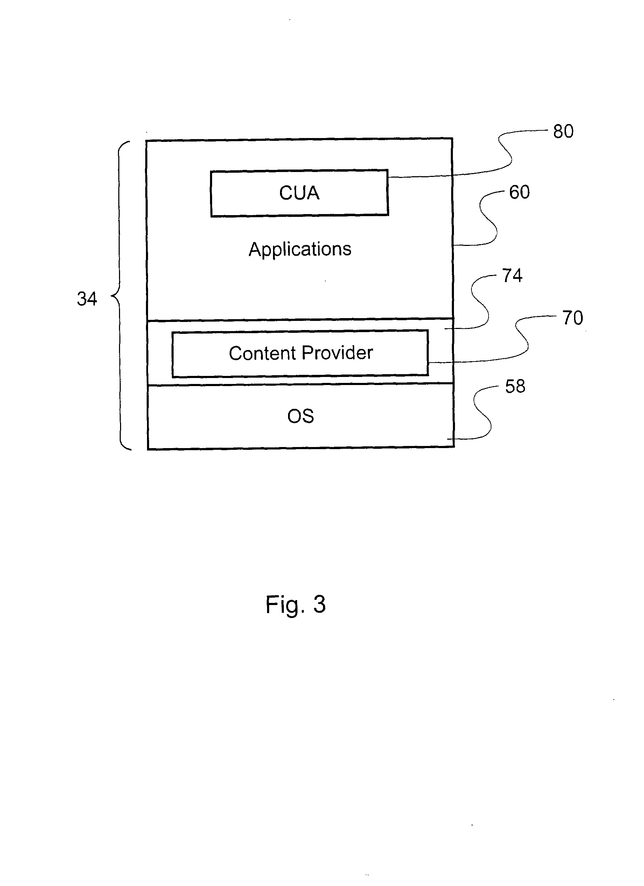

Figure 3 is a schematic overview of various components held in the main memory 34 of the personal computer 14 of Figure 2, when configured as a client station with a content provider system 74 that includes an example of a content provider 70 in accordance with the invention. As well as the operating system 58 and various client applications 60, which client applications include a calendar user application (CUA) 80, an example of a content provider 70 is provided in accordance with the present invention.

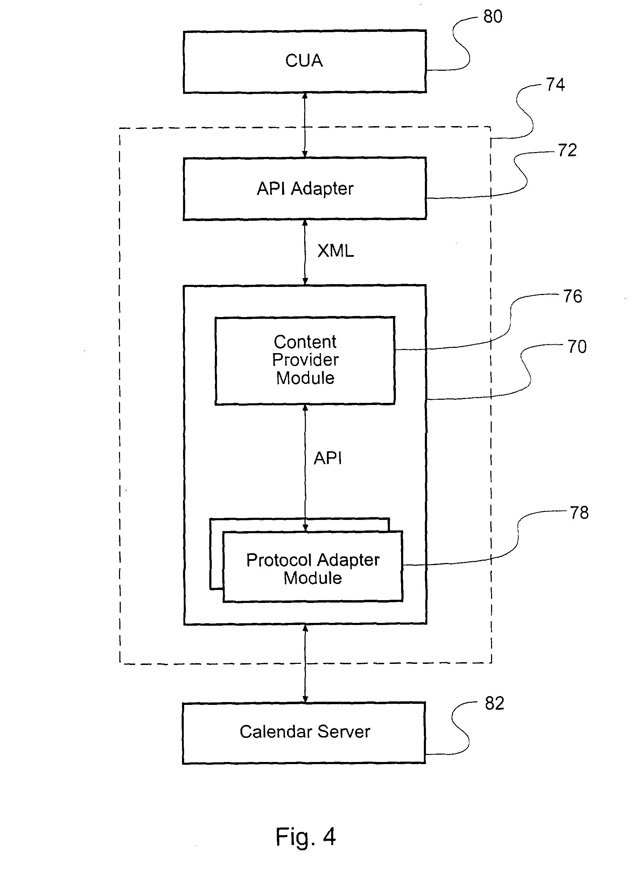

Figure 4 gives an overview of an embodiment of the present invention. As shown in Figure 4, a content provider system 74 includes a content provider 70 and an application program interface (API) adapter 72. The content provider 70 can also be sub-divided into a content provider module 76 and one or more protocol adapters 78, as is further shown in Figure 4.

The content provider 70 provides an interface between the calendar user application (CUA) 80 in a calendar server 82 (which will be provided, for example, on a calendar server system 12) as shown in Figure 1.

In general terms, the content provider 70 has responsibilities including the accepting of calendaring and scheduling requests originating at the CUA 80. It also involves the conversion of CUA 80 requests to a target server specific format (e.g. a format applicable for the calendar service 82). The content provider 70 is also responsible for delivery of the request to and receipt of responses from the target server 82. It is further responsible for the conversion of data returned from the server to an internal binary format suitable for internal needs and for presentation to the CUA 80. It is further responsible for monitoring server calendar data to enable client notification in the event of relevant changes.

The API adapter 72 provides a mechanism whereby a CUA 80 can interact with the content provider 70. The API adapter 72 maps CUA requests to content provider module requests. There may be plural APIs. These are separate from the content provider 70 itself to add flexibility for future developments. For example, future APIs could provide a different interaction with the calendar provider module according to future requirements. In the present exemplary implementation, communication with the content provider 70 is by means of eXtendible Mark-up language (XML) requests so that XML-aware clients could, if desired, bypass the API adapter mechanism 72 and send requests directly to the content provider 70. More details of XML can be found in any one of the numerous widely available textbooks on the subject and from the website of the World Wide Web Consortium at http://www.w3.org.

One example of an API adapter 72 could, for example be consistent with the so-called Universal Content Broker (UCB) framework that is embodied in the StarOffice ™ product range, as provided by Sun Microsystems, Inc.

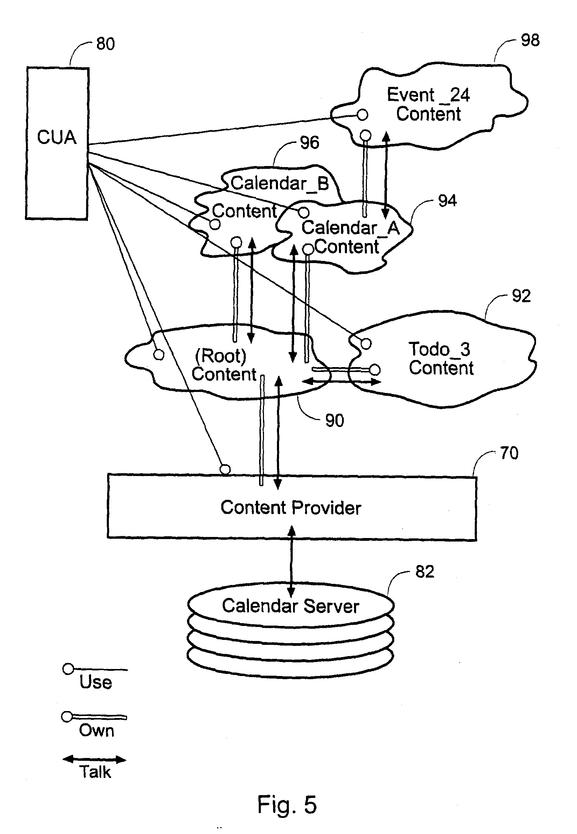

One of the basic operations of the content provider 70 is to establish storage for the assembly of the content information required to service a CUA 80 request. The storage is associated with a root address (hereinafter root). Figure 5 illustrates how various content can then be associated with that root for a CUA 80 request. Thus, a CUA 80 request creation of a root by the content provider module 76. The content provider 70 is able to create a root 90 and this root 90 is then used by the API adapter 72. The root content at 90 is created by the content provider module in response to a specific CUA request 80 accompanied by a relevant URI. The root content may be viewed as approximately equivalent to an authenticated session with the relevant calendar server.

Once a CUA 80 has obtained a root 90 and a content reference for that root, it will be free to retrieve sub-content (e.g. calendars 94/96), access the actual data represented as content, insert new content, execute commands which operate on the content, etc. These operations can be provided using appropriate content interfaces.

As represented in Figure 5, the various instances of content generated will form a hierarchy. Thus, a root calendar contains sub-calendars that contain calendar components, which in turn contain calendar component properties.

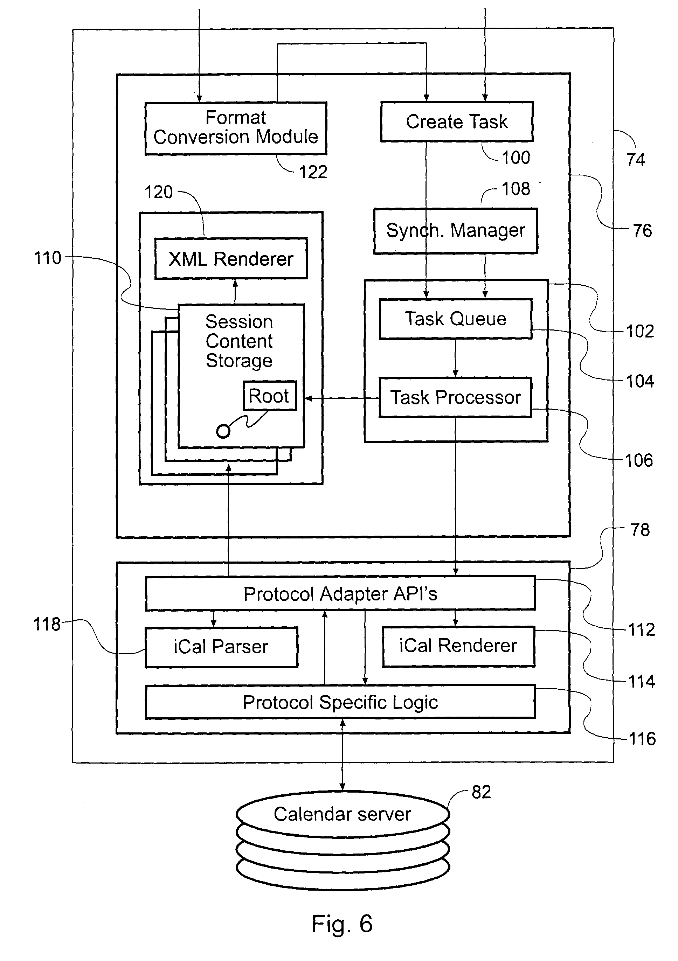

Figure 6 illustrates the content provider 70 in more detail. This module is responsible for the generation of content on receipt of a content identifier (effectively a URI) from a CUA 80. Three possible scenarios will be described relating to how a CUA 80 can use this module depending on the type of information referenced by the supplied content identifier.

A first scenario is that a content identifier referencing the target calendar server 82 is supplied by the CUA 80. In this case, a non-authenticated session is generated with the target server. A root content representing the session is generated.

A second scenario is that a content identifier references the target calendar server and authentification information is supplied by the CUA 80. In this case, an authenticated session is generated with the target server. A root content representing the session is generated. This root content provides the API adapter functionality described above.

Optionally, a third scenario that could be envisaged is where a content identifier references an authenticated session and a particular piece of data (e.g. an event) in a calendar store is provided by the CUA 80. In this case the required data would be requested from the server and would eventually be represented as content, not in the content hierarchy described above, but directly linked to the relevant root content.

From the content provider module's point of view, generating content is achieved by sending an XML request to a command manager module within the content provider module 76.

Figure 6 will be described in more detail below. Typically, a task will be received at the create task module 100 in XML format. However, if the request is not XML format, it can be received by the format conversion module 122 and be converted to a XML request which is then sent to the create task module 100.

The create task module 100 issues tasks to the task manager module 102. The task manager module 102 includes a task queue 104 in which a queue of waiting tasks is held. A task processor 106 forming part of the task manager 102 draws tasks from the task queue 104. Depending on the nature of the task, the task processor will either make request to a calendar service via the protocol adapter module 78 or will retrieve data directly from internal storage 110, as will be described later. If a server request is necessary (for inserting a new event) the task is forwarded to the protocol adapter module 78 for delivery to the calendar server 82. Otherwise, for example where the request is for the value of a calendar component property, the task processor 108 retrieves the relevant data from the internal storage 110 and returns that data.

Some calendar servers provide mechanisms for informing calendar clients of third party changes to calendar store data. Other calendar servers do not provide this information. The synchronization manager 108 is therefore responsible for ensuring that any calendar data stored internally remains up to date. An example of this is where a CUA creates content representing a user's calendar. The CUA 80 may choose to add a content event listener for content events on this calendar such as insert, delete, modify, etc. The synchronization manager 108 is operable to insert appropriate tasks in the task queue 104 to ensure that the task processor 106 sends appropriate queries to the calendar server at regular intervals to check for any such content events.

The default internal format used for representing calendar data within the content provider module 76 is an XML format modeled on the iCalendar format. The iCalendar internet calendaring and scheduling core object specification is set out in RFC 2445 (details of which can be located via the website of the Internet Engineering Task Force http://www.ietf.org). The current default application and transport protocol for server communications is the Calendar Access Protocol (CAP), the details of which can also be located at the website of the Internet Engineering Task Force http://www.ietf.org. Ideally, all calendar services to which the content provider module 76 connects would implement both of these protocols and then simply CAP requests could be sent from a basic protocol module. However, this is not the case. Accordingly, therefore, the protocol adapter module 78 is used to provide an interface between the internal protocol used within the content provider module 76 and the calendar server 82.

The protocol adapter module 78 includes protocol adapter APIs 112. The protocol adapter APIs 112 provide interfaces for use by the task processor 106 as well as protocol functionality common to calendar servers from the calendar service providers. A renderer 114 is used to render data in the internal binary format used within the content provider module 76 and the iCalendar format. Protocol specific logic 116 provides the calendar service provider specific protocol functionality required to interact with calendar servers from the calendar service providers providing the calendar server.

The iCalendar parser 118 is used to convert iCalendar data returned from the server to the internal binary format. Accordingly, it can be seen that the protocol adapter module 78 provides an interface between the internal format and the external format provided by the connected calendar server 82.

The session content storage 110 supports multiple sessions with the hierarchical storage of session data as described with reference to Figure 5. Data returned from a calendar server 82 via the protocol adapter module 78 is stored in the session content storage 110. Ideally, only a single copy of any shared server data (e.g. an event requested by two different sessions) would be stored. However as it may not be certain which session is allowed to have access to that data, in practice a copy of the data is stored for each session requiring access to that server data. A session is defined as activity relating to a root defined for a CUA request.

The data within the session content storage 110 is stored using the hierarchical structure described with reference to Figure 5. In addition, data can be stored for internal use only. The XML renderer 120 enables rendering of session content storage into XML format for return to a CUA 80.

In the following, a more detailed description of the task manager module 102 will be provided. A task is created from a parsed command. A task is associated with a session and exists within storage defined for that session.

A command is parsed by a parse component of the create task module 100. Once parsing is carried out, a task information object is generated. The task information module is called "CSATaskInfo". This task information object maintains details of the environment in which the content for a command was parsed, the root node that has been found or created and the binary representation of the parsed command. In the present implementation, the binary representation is a Document Object Model (DOM) node. More details of DOM can be found in most of the numerous widely available textbooks on XML and from the website of the World Wide Web Consortium at http://www.w3.org. Once the command has been parsed, all members described in the task information object hold all values necessary to create a task object.

A task object is allocated by a call to a create new task method. The create new task method calls a reference to the task information object when passing the command task. Once created, the command task is placed in the task queue 104 of the task manager module 102. When the task has been created, the task can be equipped with a protocol specific execution scheme and be executed.

The task queue 104 is implemented as a first-in-first-out (FIFO) queue. Tasks created by the create task module 100 are added to the task queue 104. The task queue 104 provides standard queue functionality and is controlled by a mutex to allow it to be locked when items are being added and removed. The queue is locked by the task processor 106 when placing a task object in the queue, and is locked by a task manager thread when objects are taken from the queue and are placed in a root object task queue.

The task processor 106 employs strategies to determine how tasks are executed. Strategies are protocol (and task) specific classes that control how the tasks are executed. The task processor 106 requests a strategy from the protocol adapter 78. The protocol adapter 78 examines the command represented by the task and returns an appropriate execution strategy based on the current protocol. The task is now ready to be executed.

At the point of task execution, a task manager thread will be blocked waiting for items on the task manager task queue 106. When the task processor 106 places an item on its task queue 104, the task manager thread resumes. It will go to a block state if the task manager queue 104 is empty. The task manager queue 104 maintains account of the thread serving it as well as providing standard queue functionality. In one implementation, there is only ever one thread per root. However, in other implementations, more than one thread may be assigned to any one root for servicing tasks.

A task manager thread is responsible for taking items from the task manager 104 queue and passing them to a root task queue of the root object. When adding a task to the root task queue, a task manager thread always checks to see if there is a thread serving a root queue. If there is not a thread serving a root queue, then the task thread manager obtains a thread to service the root.

A task-thread manager controls the allocation of threads within the task manager. The task thread manager maintains a limited pool of threads. The limit is set to prevent the system choking due to too many threads being allocated. Two data structures operate within the task thread manager. One is a list of all threads owned by the task thread manager, whether these are in use or not. The second is a stack that contains only available (i.e. not busy) threads. The aim is to enable efficient re-use of threads that were previously in use as opposed to allocating new threads each time.

When the task thread manager calls a get thread method, the stack is checked to see if any free threads are available. If a free thread is available, then it is popped off the stack and returned. Otherwise, a new thread is created, is added to the list and returned. When a thread finishes running, it returns itself to the stack. To do this, it is provided with a pointer to the stack to which it should return.

A task thread takes tasks from the root task queue and executes them using the strategy determined by the protocol adapter. Task threads are created and managed by the task thread manager. When a task thread is assigned a root, it takes a task from the root task queue and processes it. When the task has completed, the thread looks back into the root task queue. If there are more tasks, it then continues taking them from the root task queue and processing them. If there are no more tasks, it returns itself to the task thread manager thread pool. A task thread constructor is passed a pointer to the task thread manager thread pool. It uses this reference to return itself to the pool of available threads when it has no more tasks to execute for a currently assigned root. The task is assigned to a root by calling its start method and passing the root object that it is to serve. In the following, more details will be giving of task creation and execution.

To create a new task object, a create new task method is called. The task information class is passed to this method.

The task information class has a constructor, a few "get" methods for accessing protected data members and three data members. These include a command environment member that allows for feedback on command status, a root member which is the root object that lives within storage (each session will have a root, and each task must be associated with a root), and a DOM_Node member that will hold the passed command. As mentioned above DOM_Node structures are used for the internal binary representation of commands.

Each of the members of the task information are initialized before passing them to the create new task object. In effect, the task information is a package of information that is gathered by passing a command. For this purpose, the command parser is derived from the task information. The derived class is responsible for passing the command. It gets passed as a command parameter to the command parser and stores the results in the member it inherits from the task information object. The members of the task information are protected so that the command parser has access to all task information members.

Task objects are created through a call to the create new task object. As mentioned above, the task information object is passed with this call.

The create a new task method dynamically creates a new task implementation object and assigns it to the task class member.

There has been described a content provider for providing a unified method of access to information services. The content provider can be implemented by one or more computer programs comprising computer code. A computer program product can be provided comprising computer code on a carrier medium. The carrier medium could be storage medium (such as an optical, a magneto-optical, a magnetic or a solid state storage medium configured as a disk, tape or solid state device, etc), or a transmission medium (such as a telephonic, wireless, copper, optical or other wired medium, etc), or a mixture thereof, as appropriate.

Although particular embodiments of the invention have been described, it will be appreciated that many modifications/additions and/or substitutions may be made within the scope of the invention.

## Claims

1. A content provider operable to interface a client with a server, the content provider comprising:
a task manager operable to initiate and manage a session for the client and to query the server where required for content requested by the client;
session content storage for storing content associated with that session; and
a protocol adapter operable to respond to the task manager for interfacing with the server to retrieve content requested by the client, the retrieved content being stored in the session content storage associated with the session for the client.

2. The content provider of claim 1, wherein the protocol adapter is operable to convert between an internal data format and a server data format.

3. The content provider of claim 2, comprising a plurality of protocol adapters, each protocol adapter being operable to convert between the internal data format and a respective server data format.

4. The content provider of claim 2 or claim 3, wherein the server is a calendar server and the server data format is a calendar format.

5. The content provider of claim 4, wherein the calendar format is based on the iCalendar format.

6. The content provider of any of claims 2 to 4, wherein the internal data format is based on a markup language

7. The content provider of claim 6, wherein the internal data format is DOM.

8. The content provider of any preceding claim, wherein the task manager is operable to allocate a root in the session content storage for a client session.

9. The content provider of any preceding claim, comprising a task queue and a task processor, the task processor being operable to manage a queue of tasks.

10. The content provider of any preceding claim, wherein the task manager is responsive to a query from a client for content to access any pre-existing session storage for the client to retrieve the content if already stored therein, and to query the server otherwise.

11. The content provider of any preceding claim, wherein the task manager is operable to allocate a location in the session storage as a root for data associated with the session.

12. The content provider of any preceding claim, further comprising at least one application program interface for interfacing with a user application.

13. A computer program comprising computer code operable to form a content provider for interfacing a client with a server, the computer code being operable to provide:
a task manager component operable to initiate and manage a session for the client and to query the server where required for content requested by the client;
session content storage for storing content associated with that session; and
a protocol adapter component operable to respond to the task manager for interfacing with the server to retrieve content requested by the client, the retrieved content being stored in the session content storage associated with the session for the client.

14. The computer program of claim 13, wherein the protocol adapter component is operable to convert between an internal data format and a server data format.

15. The computer program of claim 14, wherein the computer code is operable to provide a plurality of protocol adapter components, each protocol adapter components being operable to convert between the internal data format and a respective server data format.

16. The computer program of claim 14 or claim 15, wherein the server is a calendar server and the server data format is a calendar format.

17. The computer program of claim 16, wherein the calendar format is based on the iCalendar format.

18. The computer program of any of claims 14 to 17, wherein the internal data format is based on a markup language

19. The computer program of claim 18, wherein the internal data format is DOM.

20. The computer program of any of claims 14 to 19, wherein the task manager component is operable to allocate a root in the session content storage for a client session.

21. The computer program of any of claims 14 to 20, wherein the computer code is operable to provide a task queue and a task processor component, the task processor component being operable to manage a queue of tasks.

22. The computer program of any of claims 14 to 21, wherein the task manager component is responsive to a query from a client for content to access any pre-existing session storage for the client to retrieve the content if already stored therein, and to query the server otherwise.

23. The computer program of any of claims 14 to 22, wherein the task manager component is operable to allocate a location in the session storage as a root for data associated with the session.

24. The computer program of any of claims 14 to 23, further comprising at least one application program interface for interfacing with a user application.

25. A computer program product comprising a computer program according to any of any of claims 13 to 24, the computer code being carried by a carrier medium.

26. A computer system comprising a processor, memory and a content provider according to any one of claims 1 to 12.

27. The computer system of claim 26, wherein the content provider comprises a computer program according to any of claims 13 to 24.

28. The computer system of claim 26 or claim 27, wherein the computer system is a client system connectable to a network and incorporating an application that forms the client to be interfaced with a server.

29. A method of providing content for interfacing a client with a server, the method comprising:
initiating and managing a session for a client and querying the server where required for content requeste2d by the client;
storing content associated with that session; and
interfacing with the server to retrieve content requested by the client, the retrieved content being stored in the session content storage associated with the session for the client.

30. The method of claim 29, comprising converting between an internal data format and a server data format.

31. The method of claim 30, comprising converting between an internal data format and a selectable one of a plurality of server data formats.

32. The method of claim 30 or claim 31, wherein the server is a calendar server and the server data format is a calendar format.

33. The method of claim 32, wherein the calendar format is based on the iCalendar format.

34. The method of any of claims 29 to 33, wherein the internal data format is based on a markup language

35. The method of claim 34, wherein the internal data format is DOM.

36. The method of any of claims 29 to 35, comprising allocating a root in the session content storage for a client session.

37. The method of any of claims 29 to 36, comprising managing a queue of tasks.

38. The method of any of claims 29 to 37, comprising responding to a query from a client for content to access any pre-existing session storage for the client to retrieve the content if already stored therein, and to query the server otherwise.

39. The method of any of claims 29 to 38, comprising allocating a location in the session storage as a root for data associated with the session.
